# DEMANDE DE BREVET EUROPEEN

(11) **EP 0 569 299 A1**
(43) Date de publication de la demande: **10.11.1993**
(21) Numéro de dépôt: 93401164.4
(22) Date de dépôt: 06.05.1993
(51) Int. Cl.: B32B 17/10

(54) **Vitrage feuilleté**

(30) Priorité: 07.05.1992 FR 9205623
(71) Demandeur: SAINT GOBAIN VITRAGE INTERNATIONAL, F-92400 Courbevoie (FR)
(72) Inventeur: L'Her, Anne, F-75018 Paris (FR); Chartier, Pascal, F-75015 Paris (FR); Robineau, Joel, F-93160 Noisy Le Grand (FR)
(74) Mandataire: Muller, René

(57) **Abrégé**

Vitrage feuilleté comportant au moins une feuille de verre 1,5 et au moins une couche en matériau plastique à base de chlorure de polyvinyle 3. Entre la couche à base de PVC 3 et la feuille de verre 1,5 est disposée une couche adhésive 2, 4 en matériau plastique présentant des propriétés d'adhésion supérieures avec le verre qu'avec le PVC.

## Description

La présente invention concerne un vitrage feuilleté, comprenant au moins une feuille de verre et au moins une feuille en matériau plastique.

Les vitrages feuilletés, utilisés dans le bâtiment ou dans les véhicules de transport sont généralement constitués de deux feuilles de verre entre lesquelles est disposée une feuille de polymère thermoplastique généralement en polyvinylbutyral (PVB).

Le PVB est utilisé en tant qu'intercalaire en raison de son module de traction élevé, de son allongement à la rupture important et parce qu'il remplit efficacement un rôle d'absorbeur d'énergie tout en offrant une adhésivité au verre relativement importante et donc un pouvoir de rétention des éclats de verre plutôt satisfaisant en cas de chocs ou de bris du vitrage.

Cependant, le PVB n'est pas entièrement satisfaisant car il peut être jugé relativement coûteux et de par le fait qu'il assume seul les deux fonctions essentielles d'absorption d'énergie et d'adhésion au verre. Il est donc forcément le fruit d'un compromis entre diverses propriétés que l'on peut souhaiter modifier.

Ainsi, il est connu du brevet US-4,600,627 un type de vitrage feuilleté comprenant, entre deux feuilles de verre, une pluralité de feuilles en matériau plastique comportant une feuille intercalaire en polymère tel que le polyester ou le chlorure de polyvinyle (PVC) disposée entre deux feuilles assurant la liaison entre la feuille intercalaire et les feuilles de verre. Ces deux feuilles peuvent notamment être chacune à base d'un copolymère d'éthylène et d'acétate de vinyle désigné sous le terme d'EVA et avoir une épaisseur d'environ 0,2 millimètre. Cette structure n'est cependant pas exempte d'inconvénients, dans la mesure notamment où les feuilles d'EVA ne présentent pas de propriétés adhésives suffisantes, et plus particulièrement dans des conditions extrêmes de température.

Le but de l'invention est alors de trouver une nouvelle structure de vitrage feuilleté présentant des performances, en termes de caractéristiques optiques et mécaniques et de comportement face au vieillissement, qui soient appropriées pour une utilisation en tant que vitrage de sécurité, notamment pour batîment et pour les véhicules à moteur.

Le vitrage feuilleté selon l'invention comporte au moins une feuille en verre et une couche en matériau à base de chlorure de polyvinyle, PVC, une couche adhésive étant disposée entre la feuille de verre et la couche à base de PVC, ladite couche adhésive présentant des propriétés d'adhésion supérieures avec le verre qu'avec le PVC. En mettant au point un intercalaire pour vitrage feuilleté qui est composite et qui associe au moins une couche adhésive très particulière à une feuille de PVC, l'invention permet très avantageusement d'optimiser les caractéristiques du vitrage : En effet, les rôles de chacun des matériaux sont cette fois bien différenciés :

La couche adhésive, adhérant fortement au verre, retient efficacement les éclats de verre en cas de bris. En outre, elle adhère suffisamment à la couche à base de PVC pour la maintenir solidement en place dans le vitrage sans pour autant altérer les propriétés d'absorption d'énergie de cette couche à base de PVC. En effet, dans le cas d'un intercalaire unique type PVB, si l'on ajuste son pouvoir d'adhésion au verre pour augmenter sa capacité à retenir les éclats de verre en cas de bris, on est conduit à diminuer simultanément sa capacité d'absorption d'énergie, qui exige au contraire une adhérence plus limitée au verre.

L'utilisation d'un intercalaire composite permet au contraire une optimisation séparée des deux fonctions essentielles d'un vitrage feuilleté, et ouvre ainsi une gamme de possibilités bien plus vastes que l'utilisation d'un intercalaire unique.

Pour la réalisation du vitrage feuilleté selon l'invention on choisira donc une couche adhésive qui d'après le test au cisaillement du vitrage feuilleté présente une meilleure adhésion avec le verre qu'avec la couche de PVC.

Une telle couche adhésive est par exemple une couche d'un terpolymère d'éthylène, d'ester acrylique et d'anhydride maléique, ou une couche d'un terpolymère d'éthylène, d'acétate de vinyle et d'anhydride maléique, le pourcentage en poids d'anhydride maléique dans ces terpolymères étant compris entre 0,1 et 5 %.

Un mode de réalisation avantageux du composite selon l'invention utilise en tant que couche adhésive un terpolymère d'éthylène, d'acétate de vinyle et d'anhydride maléique dans lequel la quantité d'anhydride maléique est ajustée à un pourcentage en poids compris entre 0,1 et 5 %, de préférence entre 0,5 et 2 %. Il est important de respecter cette proportion en anhydride, car c'est bien ce monomère qui permet d'obtenir une adhésivité de la couche adhésive adaptée au verre d'une part et à la couche de PVC d'autre part. Cependant, une proportion plus élevée d'anhydride risquerait de conduire tout d'abord à des difficultés de mise en oeuvre du terpolymère par collage sur les outillages, et risquerait également d'abaisser globalement la résistance au choc du vitrage feuilleté. De même, il est souhaitable que le taux d'acétate de vinyle dudit terpolymère soit compris entre 15 et 35 et de préférence entre 20 et 30 % en poids afin de garantir une transparence suffisante à la couche adhésive.

En outre, il est préférable de fabriquer le terpolymère par une réaction de copolymérisation statistique, qui permet probablement d'obtenir un polymère avec une répartition en anhydride maléique "dans la masse" la plus homogène possible. Il reste cependant éventuellement possible de procéder à une première étape de polymérisation entre l'éthylène et l'acétate de vinyle, puis à une polymérisation par addition d'anhydride maléique au polymère obtenu.

Concernant la formulation du PVC, il est recommandé d'ajouter au polymère PVC standard divers additifs, de manière à rendre le vitrage utilisable comme vitrage de sécurité quelles que soient les conditions climatiques. Il est nécessaire d'incorporer des agents stabilisants, qui permettent au PVC de résister notamment aux rayons ultraviolets sans perdre sa transparence, ainsi que des plastifiants, de manière à ce qu'il conserve notamment ses capacités d'absorption d'énergie de par sa souplesse même à très basse température, par exemple à -20°C.

En général, on emploie de 20 à 50 % en poids de résine (PCR) de plastifiant(s), qui peuvent, pris seul ou en mélange, appartenir au groupe des adipates, azélates, phtalates ou sébaçates, soit avec des chaînes di-alkyles notamment en C₄-C₁₂, soit avec des chaînes mixtes alkyles et alkyl-aryles.

On peut aussi utiliser des esters carboxyliques du glycol.

Dans la famille des adipates, il est préféré l'adipate de di-octyle (plus précisément d'éthyl 2-hexyl) ou d'octylbenzyle. Dans la famille des azélates, on préfère également l'azélate d'octyle. Dans la famille des phtalates, on préfère le di-butylphtalate et dans la famille des sébaçates le di-butylsébaçate.

Le critère reste d'une part une bonne compatibilité avec le PVC, d'autre part une excellente tenue à basse température.

Concernant les stabilisants à la lumière, sont connues d'une part les substances piégeant les entités radiculaires et/ou l'acide chlorohydrique qui peuvent se dégager. On peut citer notamment différents sels d'étain tel que le dibutyl-dilaurate d'étain, ou des produits d'origine végétale tel que l'huile de soja epoxydée. En complément ou en remplacement de ces substances "piégeantes", on peut utiliser les substances jouant le rôle de filtre ultra-violet, comme notamment certains dérivés de la benzotriazole ou certains types d'amines à empêchement stérique. On peut d'ailleurs envisager d'incorporer ces filtres dans les films adhésifs également.

Ces stabilisants sont utilisés de préférence dans une proportion de 2 à 12 % en poids de résine.

S'il est nécessaire d'utiliser des couches à base de PVC d'épaisseur non négligeable et de préférence comprise entre 250 et 1000 micromètres, en vue de vitrages feuilletés pour bâtiment notamment, par contre les couches adhésives peuvent être beaucoup plus minces et leur épaisseur varie de préférence entre 20 et 70 micromètres.

Selon une réalisation du vitrage selon l'invention, celui-ci comprend une structure constituée de deux feuilles de verre et de l'intercalaire composite formé d'une âme en PVC disposée entre deux couches adhésives présentant d'après le test au cisaillement des propriétés adhésives supérieures avec le verre qu'avec le PVC.

Ce vitrage peut être utilisé en tant que vitrage bâtiment ou vitrage de véhicule de transport.

Selon une autre réalisation du vitrage selon l'invention celui-ci comprend une structure constituée d'une feuille de verre et d'une feuille de matière plastique rigide, notamment en polycarbonate, en polyméthacrylate de méthyle, reliées entre-elles, par l'intercalaire composite formé d'une couche en PVC et d'au moins une couche adhésive ayant les propriétés indiquées ci-dessus entre le verre et le PVC, et éventuellement une autre couche adhésive de ce type ou d'un type différent disposée entre le PVC et la feuille en matière plastique rigide.

Ce vitrage peut être utilisé en tant que vitrage anti-effraction ou anti-balles par exemple.

D'autres réalisations du vitrage selon l'invention utilisant une feuille de verre et une couche de PVC séparée de la feuille de verre par une couche adhésive ayant les propriétés indiquées ci-dessus peuvent être envisagées.

Dans les vitrages feuilletés selon l'invention, la ou les feuilles de verre peuvent être en verre non recuit, en verre recuit ou en verre trempée thermiquement ou chimiquement.

Le procédé de fabrication des vitrages selon l'invention est similaire aux procédés d'assemblage usuels consistant à empiler les éléments de l'ensemble feuilleté et à faire subir à l'ensemble un assemblage par calandrage suivi d'un cycle d'autoclavage. L'intercalaire composite peut préalablement être constitué simultanément, par une double ou triple co-extrusion, ou par enduction par la couche adhésive d'au moins une des faces de la couche de PVC. Il est souhaitable, comme il est connu de l'homme de l'art, une fois l'intercalaire composite formé, de donner un état de surface structuré, à relief, aux couches adhésives. Cet état de surface irrégulier permet notamment lors de l'assemblage du vitrage une meilleure évacuation de l'air à l'interface verre/intercalaire.

Les caractéristiques et avantages de l'invention ressortent de la description détaillée ci-après d'exemples de réalisation non limitatifs, à l'aide d'une figure unique représentant schématiquement une coupe transversale du vitrage de l'invention. Les rapports d'épaisseur des différentes couches de matériau ne sont pas respectées pour plus de clarté.

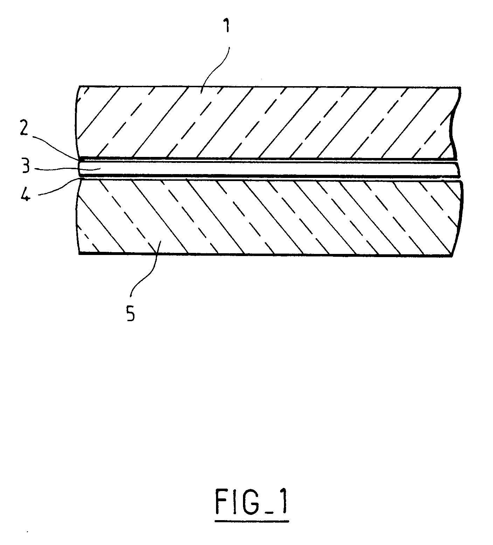

La figure 1 représente donc un vitrage formé de deux substrats 1,5 entre lesquels est disposé l'intercalaire composite de l'invention composé d'une couche de PVC 3 centrale disposée entre deux couches adhésives de terpolymère 2,4. Ce vitrage correspond aux exemples 1 et 2, tandis que les exemples 3 et 4 sont donnés à titre de comparaison et concernent des vitrages avec deux substrats de verre et une unique feuille intercalaire standard en PVB. On décrit dès à présent les tests qui ont été effectués sur les 4 vitrages obtenus, qui sont tous de dimensions 30 x 30 cm² :
- le test de choc à la bille permet de mettre en évidence le comportement au choc du vitrage feuilleté de sécurité. Il s'effectue conformément à la norme européenne R 43 concernant "les prescriptions uniformes relatives à l'homologation du vitrage de sécurité et des matériaux pour vitrages destinés à être montés sur les véhicules à moteur et leurs remorques". Les résultats de ce test s'expriment en hauteur de chute en pieds.
- la contrainte de cisaillement T permet de mettre en évidence la résistance au cisaillement de l'assemblage. Elle s'exprime en N/cm².

Les résultats de ces deux tests pour les 4 exemples sont regroupés dans un tableau ci-après.

Deux tests de durabilité ont été effectués en conformité avec la norme NF-P 78-303 concernant les verres feuilletés pour vitrage de batîment :
- le test de résistance au décollement consiste à placer pendant 14 jours le vitrage en position verticale dans de l'air saturé d'humidité à une température de 55°C ± 2°C, puis pendant 7 jours dans une enceinte à 20°C ± 2°C dans de l'air d'humidité relative de 30 % + 5 %. A l'issue de ces deux périodes, on ne doit constater aucune augmentation du bullage éventuel ni du décollement sur une largeur supérieure à 7 mm à compter du bord. La troisième étape consiste à placer le vitrage pendant 3 minutes dans de l'eau à 65°C puis 2 heures dans de l'eau à 100°C. Là encore, on ne doit constater aucune augmentation du bullage initial, ni de décollement sur plus de 7 millimètres.
- le test de tenue au rayonnement consiste à soumettre le vitrage normalement à une source lumineuse constituée par une lampe à ultra-violets distante de 230 mm, de puissance 500 W, émettant une énergie dans une gamme de longueurs d'onde de 300 à 450 nanomètres avec une distance entre électrodes de 130 millimètres. On mesure la transmission globale suivant l'illuminant C de la Commission Internationale de l'Eclairage avant exposition puis après exposition pendant 100 heures. Il ne doit pas y avoir plus de 5 % de différence entre les deux valeurs, ni d'apparition d'inhomogénéité de teinte.

### EXEMPLE 1

Les substrats en verre 1,5 sont en verre silico-sodo calcique flotté de 3 millimètres d'épaisseur.

La feuille 3 de PVC a une épaisseur de 500 micromètres. Le PVC contient des plastifiants et des agents stabilisants dans les proportions suivantes : 18 % en poids de la résine de PVC d'adipate de dioctyle et 12 % en poids de la résine de PVC de phtalate de dioctyle en tant que plastifiants, 6 % en poids de la résine de PVC d'une huile de sojo époxydée en tant que stabilisant à la lumière.

Les couches adhésives 2 et 4 ont chacune une épaisseur de 40 micromètres. Elles sont à base d'un terpolymère comprenant de l'anhydride maléique, de l'acétate de vinyle et de l'éthylène, obtenu par copolymérisation statistique. La proportion en poids d'anhydride maléique est d'environ 1 %, celle de l'acétate d'environ 26 %.

L'intercalaire composite associant les couches 2, 3 et 4 est obtenu par calandrage à chaud. L'assemblage de l'ensemble des couches 2, 3, 4 et des substrats 1,5 s'effectue de manière connue par assemblage par calandrage suivi d'un assemblage définitif utilisant un cycle d'autoclave vers 150°C sous une pression d'environ 10 bars, soit 10⁶ Pascals. Le vitrage obtenu est parfaitement transparent et de bonne qualité optique.

Il passe avec succès les deux tests de durabilité : aucun délaminage et aucune formation de bulles n'est discernable.

### EXEMPLE 2

Il est en tous points similaire à l'exemple, mais ici les substrats en verre 1,5 ont chacun une épaisseur de 4 millimètres. Il passe aussi avec succès les deux tests de durabilité.

### EXEMPLE 3

Il est constitué de deux substrats de verre silico-sodo-calcique flotté de 3 millimètres d'épaisseur, et d'une unique feuille intercalaire de PVB de 380 micromètres (il s'agit d'un produit commercialisé en tant que vitrage bâtiment). L'assemblage se fait par passage dans un autoclave tout comme à l'exemple 1.

### EXEMPLE 4

Il est similaire à l'exemple 3, mais ici l'épaisseur des deux substrats en verre est de 4 millimètres et celle de la feuille de PVB de 760 micromètres (il est également commercialisé).

| Exemples | choc à la bille | T cisaillement |
|---|---|---|
| 1 | 18 | 110 ± 10 |
| 2 | 28 | 90 ± 30 |
| 3 | 8 | 190 ± 30 |
| 4 | 21 | 160 ± 20 |

La comparaison de ces exemples à épaisseurs de substrats en verre égales (soit les exemples 1 et 3 d'une part et 2 et 4 d'autre part) met en évidence un comportement au choc des vitrages selon l'invention nettement supérieur à celui des vitrages standards avec PVB, et ceci de manière tout à fait inattendue.

Ainsi, on constate que le vitrage de l'exemple 1 avec une épaisseur de couche 3 de PVC environ 1,4 fois supérieure à l'épaisseur de la feuille de PVB de l'exemple 3, présente cependant un résultat de test de choc à la bille 2,25 fois plus élevé. De manière encore plus surprenant, le vitrage de l'exemple 2 selon l'invention, avec une épaisseur de couche de PVC 34 % inférieure à l'épaisseur de la feuille de PVB de l'exemple 4, présente tout de même un résultat au choc à la bille améliorée d'un facteur 1,3. La couche 3 en PVC selon l'invention, en synergie avec les deux couches adhésives 2,4, se révèle donc a priori un meilleur absorbeur d'énergie. On peut ainsi, suivant les performances en termes de sécurité que l'on veut obtenir, moduler l'épaisseur de la couche 3 à base de PVC. On peut ainsi envisager des vitrages aux performances égales à celles des vitrages avec PVB, mais avec des couches de PVC notamment plus minces, ce qui est un avantage économique évident, d'autant plus que le PVC est beaucoup moins coûteux que le PVB.

Par ailleurs, on a pu observer, de manière plus qualitative, que, suite au test de choc à la bille, les vitrages des exemples 1, 2 selon l'invention présenteraient, après rupture due au choc, une "surface libre" nettement plus faible que les vitrages standards des exemples 3 et 4, ce qui est un avantage indéniable du point de vue de la sécurité : cette "surface libre" correspond à la surface d'intercalaire dans le vitrage qui reste nue après le bris de celui-ci. Plus cette "surface libre est petite", plus elle traduit une bonne rétention des éclats.

Par contre, les valeurs de contrainte à la rupture de cisaillement sont un peut plus faibles pour les vitrages de l'invention des exemples 1, 2 que pour les vitrages des exemples 3, 4. Les valeurs restent cependant très nettement suffisantes pour éviter tout clivage en utilisation normale, dans un bâtiment par exemple. Ceci provient du fait que les modes de rupture en cisaillement sont extrêmement différents suivants les deux types d'intercalaire. Dans le cas des vitrages selon l'invention, le terpolymère des couches adhésives 2, 4 assure une forte adhésion au verre, et c'est l'interface entre les couches 2, 4 et la couche 3 de PVC qui "cède" la première. C'est cette forte adhérence couche adhésive/verre qui permet de retenir efficacement les fragments de verre en cas de bris, la couche 3 en PVC retenue de manière moins rigide aux couches adhésives pouvant alors absorber au mieux l'énergie en cas de choc.

Il est également très important de noter que le comportement en durabilité des vitrages selon l'invention est au moins aussi bon que celui des vitrages standards, alors qu'à priori on pouvait craindre que le PVC soit plus sensible que le PVB à certaines conditions climatiques.

Il est à noter à ce propos qu'un échantillon conforme à l'exemple 1, excepté que cette fois la feuille 3 de PVC présente une épaisseur de 300 micromètres, est apte à subir une atmosphère saturée d'humidité à environ 60°C pendant au moins 3000 heures sans montrer ni jaunissement discernable, ni générer de bulles ; résultat extrêmement satisfaisant.

En conclusion, les vitrages feuilletés selon l'invention offrent une alternative intéressante aux vitrages feuilletés déjà connus, et atteignent des performances mécaniques élevées, et ceci avec des avantages substantiels : tout d'abord, ils emploient un polymère à base de PVC, qui, per se, présente pourtant une mauvaise adhésion au verre. Même associé à d'autres matériaux plastiques en intercalaire composite, il engendre un gain de coût ou terme de matière première qui est loin d'être négligeable. Mais surtout, ces vitrages utilisent un intercalaire "composite" permettant d'adapter l'un ou l'autre des matériaux plastiques, isolément, selon la caractéristique plus particulièrement recherchée, chacun des matériaux pouvant alors remplir au mieux sa fonction spécifique.

## Revendications

1. Vitrage feuilleté comportant au moins une feuille de verre et au moins une couche en matériau plastique à base de chlorure de polyvinyle, caractérisé en ce qu'entre la couche à base de PVC et la feuille de verre est disposée une couche adhésive en matériau plastique présentant des propriétés d'adhésion supérieures avec le verre qu'avec le PVC .

2. Vitrage feuilleté selon la revendication 1, caractérisé en ce que la couche adhésive est à base d'un terpolymère d'éthylène, d'acétate de vinyle ou d'ester acrylique, et d'anhydride maléique, le pourcentage en poids d'anhydride maléique étant compris entre 0,1 et 5 %.

3. Vitrage selon la revendication 2, caractérisé en ce que le terpolymère de la couche adhésive est un terpolymère d'éthylène, d'acétate de vinyle et d'anhydride maléique et qu'il est obtenu par polymérisation statistique de l'éthylène, de l'acétate de vinyle et de l'anhydride maléique.

4. Vitrage selon l'une des revendications 2 à 3, caractérisé en ce que le terpolymère de la couche adhésive contient de 15 à 35 % et de préférence de 20 à 30 % en poids d'acétate de vinyle.

5. Vitrage selon l'une des revendications 1 à 4, caractérisé en ce que la couche à base de PVC comprend au moins un plastifiant et/ou agent stabilisant afin que le vitrage soit utilisable en tant que vitrage de sécurité dans une large gamme de conditions climatiques.

6. Vitrage selon l'une des revendications 1 à 5, caractérisé en ce qu'il comprend deux feuilles en verre (1, 5) entre lesquelles sont disposées, de part et d'autre de la couche à base de PVC (3), deux couches adhésives (2, 4).

7. Vitrage selon l'une des revendications 1 à 6, caractérisé en ce que la couche à base de PVC (3) a une épaisseur comprise entre 250 et 1000 micromètres.

8. Vitrage selon l'une des revendications 1 à 7, caractérisé en ce que chaque couche adhésive (2, 4) a une épaisseur comprise entre 20 et 70 micromètres.

9. Vitrage selon une des revendications 1 à 5, caractérisé en ce qu'il comprend une feuille de verre et une feuille en matière plastique rigide entre lesquelles sont disposées une couche à base de PVC et deux couches adhésives.

10. Vitrage feuilleté comportant au moins une feuille de verre et au moins une couche en matériau plastique à base de chlorure polyvinyle caractérisé en ce qu'entre la couche à base de PVC et la feuille de verre est disposée une couche adhésive à base d'un terpolymère d'éthylène, d'acétate de vinyle et d'anhydride maléique, le pourcentage en poids d'anhydride maléique étant compris entre 0,1 et 5 %.

11. Application du vitrage selon l'une des revendications précédentes en tant que vitrage de sécurité, notamment pour équiper des bâtiments ou des véhicules de transport.
